# EUROPÄISCHE PATENTSCHRIFT

(11) **EP 0 921 328 B1**
(45) Veröffentlichungstag und Bekanntmachung des Hinweises auf die Patenterteilung: **04.10.2001**
(21) Anmeldenummer: 98121685.6
(22) Anmeldetag: 13.11.1998
(51) Int. Cl.: F16C 11/00, F16C 33/08

(54) **Lagerbuchse mit Mittelbund sowie deren Verwendung und Herstellungsverfahren**
Bearing bush with central collar, use and method of manufacture thereof
Douille avec une collerette médiane, son utilisation et son procédé de fabrication

(30) Priorität: 29.11.1997 DE 19753111
(43) Veröffentlichungstag der Anmeldung: 09.06.1999
(73) Patentinhaber: Federal-Mogul Wiesbaden GmbH & Co.KG, 65201 Wiesbaden (DE)
(72) Erfinder: Damour, Philippe, 60489 Frankfurt (DE); Kirchhof, Klaus, 65527 Niedernhausen (DE); Deusser, Stpehan, 65201 Wiesbaden (DE)

(56) Entgegenhaltungen:
- DE-C- 841 087
- GB-A- 1 458 047
- US-A- 1 793 874
- US-A- 4 048 703
- US-A- 4 231 623
- US-A- 4 796 457

## Beschreibung

Die Erfindung betrifft eine Lagerbuchse mit einem Stützkörper, der auf seiner Innenfläche mindestens eine Schicht, insbesondere eine Gleitschicht, aufweist sowie deren Verwendung und das Herstellungsverfahren.

Lagerbuchsen finden vielfältige Anwendung, z.B. in Türscharnieren, als Rollenlagerung, Pedallager in Biegegelenken usw..

Je nach Anwendungszweck und Einbaulage weisen die Buchsen einen oder zwei Bunde (Endbunde) an einem oder an beiden Buchsenenden auf. Die Buchsen werden mit Übermaß eingebaut, wodurch ein unverrückbarer Sitz der Buchse gewährleistet wird. Dies gelingt aber nur, wenn die Buchse in ein entsprechend massives Bauteil eingepreßt wird.

Wenn Buchsen in Gummiteilen verwendet werden sollen, ist der Sitz deutlich schlechter. Um hier Abhilfe zu schaffen, wurde bisher versucht, die Außenfläche aufzurauhen oder zu rändeln. Das elastische Material mußte bisher auf die Buchse aufvulkanisiert werden, wobei zum Teil durch die hierbei auftretenden hohen Temperaturen Beschädigungen des Gleitmaterials der Buchse auftreten konnten. Außerdem mußten im Falle von Endbunden diese nachträglich umgebördelt werden.

Bei anderen Anwendungsfällen, wie z.B. Pedallagern oder dergleichen, bei denen die Buchsen in einem Pedalhebel angeordnet werden müssen, sind zusätzliche Führungsteile wie eine Nabe notwendig, in die zwei Bundbuchsen eingesetzt werden. Dies ist insbesondere dann erforderlich, wenn der Pedalhebel eine geringere Wandstärke aufweist als die axiale Länge der Buchsen.

Aus der US 3,351,999 ist eine Kugellagerung mit einer entsprechend geformten Buchse bekannt, die aus einem porösen Metall besteht, das mit einem Schmiermittel imprägniert ist. Zur Herstellung der Kugellagerung wird eine zylindrische Buchse zusammen mit der Kugel in eine an der Außenseite geschlitzte Halterung eingesetzt. Durch einen Stauchvorgang erhält die Buchse und damit auch die Halterung eine runde Kontur, wobei aufgrund des Außenschlitzes die Buchse eine geringförmige Deformation erfährt, die zur Befestigung in der Halterung dienen soll. Im Bereich der Deformation liegt die Buchse nicht an der Kugel an, weil die Deformation nicht zu einem Aneinanderliegen der Innenflächen der wulstförmigen Deformation geführt hat. Die schrägen Außenflächen der verformten Bereiche gewährleisten keinen sicheren Halt der Buchse.

Aus der DE-PS 841 087 ist ein Pedalgleitlager bekannt, bei dem die Buchse, in der ein Rohr gelagert ist, den Kippbewegungen des Rohres begrenzt folgen kann. Zur Begrenzung der Kippbewegung weist die Buchse einen nach außen weisenden Wulst auf, der sich in einer Aussparung bewegen kann, die in einem die Buchse umgebenden ringförmigen Bauteil vorgesehen ist. Die Buchse besteht aus Stahl und besitzt keinerlei Gleitbeschichtungen. Der Wulst ist im Inneren offen und besitzt über den Umfang verteilte radiale Schlitze, wodurch die Stabilität des Wulstes erheblich geschwächt wird, so daß eine derartige Buchse für einen starren Einbau mit seitlichen Belastungen nicht geeignet ist, weil mit der Zeit sich die Buchse lockert und die ursprüngliche Einbaulage verläßt.

Die US 1,793,874 beschreibt ein Lager, das eine gewölbte Buchse aufweist, in der ein Gleitgewebe eingelegt ist. Die Buchse ist von einem Stütz- oder Haltering umgeben, der an seiner Außenseite ein oder zwei wulstförmige Verformungen zur Fixierung in einem Gehäuse aufweist. Zwischen der Buchse und der Halterung ist ebenfalls ein Gleitgewebe angeordnet, so daß die Buchse in der Halterung beweglich gelagert ist. Diese Lagerung ist aufgrund der Anzahl der Bauteile aufwendig und teuer und darüber hinaus benötigt sie einen entsprechend großen Platzbedarf.

Aufgabe der Erfindung ist daher eine Lagerbuchse, die ohne Zusatzbauteile eingebaut werden kann und einen festen Sitz gewährleistet, insbesondere im Zusammenwirken mit elastischen Bauteilen. Es ist auch Aufgabe der Erfindung, ein entsprechendes Herstellungsverfahren für solche Lagerbuchsen bereitzustellen.

Diese Aufgabe wird mit einer Lagerbuchse gelöst, bei der mindestens ein Bund (Mittelbund) in Form eines umlaufenden geschlossenen Wulstes beabstandet von den Buchsenenden vorgesehen ist.

Unter einem geschlossenen Wulst oder geschlossenen Bund wird ein Wulst oder Bund verstanden, bei dem die Innenflächen aneinanderliegen. Dadurch ist der Bund nicht nur platzsparend, sondern auch stabiler als Wulste mit Zwischenraum (sog. offene Wulste).

Vorzugsweise sind die Außenflächen des Bundes senkrecht zur Längsachse der Lagerbuchse ausgerichtet. Dies hat den Vorteil, daß der Bund flächig an dem Bauteil anliegt, in dem die Lagerbuchse eingebaut ist. Es wird dadurch eine verbesserte Befestigung erzielt.

Die US-A-4 796 457 beschreibt ein Lager mit einem Stützkörper und einer inneren Gleitschicht, wobei die Gleitschicht in von den Buchsenenden beabstandeten Bereichen freiliegt.

Diese bekannte Buchse ist in ihrer Gesamtkonzeption jedoch nicht dazu geeignet, nachträglich axial gestaucht zu werden.

Aus US-A-4,048,703 ist ein Verfahren zum Stauchen einer Buchse bekannt, welches ausschließlich zur Ausbildung eines Bundes an einem Buchsenende geeignet ist.

Vorzugsweise ist die radiale Erstreckung r des Wulstes größer als die axiale Erstreckung a. Die Befestigung an oder in einem Bauteil wird dadurch weiter verbessert und ein Lösen aus dem Bauteil verhindert.

Ein oder mehrere Mittelbunde ermöglichen eine definierte Einbaulage ohne Zusatzbauteile. So kann beispielsweise ein Bauteil, dessen Materialstärke geringer ist als die Achslänge der Buchse zwischen zwei Mittelbunden angeordnet werden.

In Kombination mit ein oder zwei Endbunden kann beispielsweise auch eine asymmetrische Befestigung des Bauteils realisiert werden. Auch können mehrere Bauteile mit einer Buchse verbunden werden, wenn die Buchse eine entsprechende Anzahl von Bunden, dies können Mittel- und/oder Endbunde sein, aufweist.

Im Zusammenwirken mit Bauteilen aus elastischen Materialien dient der Mittelbund zur Fixierung, so daß zusätzliche Maßnahmen, wie z.B. Aufrauhen der Außenfläche der Buchse, nicht erforderlich sind.

Derartige Lagerbuchsen können als Einsatzteil für eine Rolle aus elastischem Material, insbesondere aus Gummi verwendet werden.

Eine weitere Anwendung einer Lagerbuchse mit zwei Mittelbunden ist die Verwendung als Pedallagerung. Eine erfindungsgemäße Pedallagerung ist dadurch gekennzeichnet, daß Nabe und Buchsen einteilig in Form einer Buchse mit zwei Mittelbunden ausgebildet sind. Zwischen den beiden Mittelbunden ist der Pedalhebel angeordnet bzw. befestigt. Der Vorteil dieser Pedallagerung besteht darin, daß anstatt der üblichen drei Bauteile - eine Nabe und zwei Bundbuchsen - nur ein Bauteil, nämlich die erfindungsgemäße Buchse mit zwei Mittelbunden benötigt wird, wodurch die Herstell- und Montagekosten gesenkt werden können.

Eine Lagerbuchse mit mindestens einem Mittelbund und mit mindestens einem Endbund kann als Lagerung für ein Biegegelenk, insbesondere für eine Lenksäule verwendet werden.

Das Herstellungsverfahren geht von einer nach herkömmlichen Verfahren hergestellten Lagerbuchse aus, die jedoch die Besonderheit aufweist, daß der Stützkörper in mindestens einem ringförmigen von den Buchsenenden beabstandeten Bereich an seiner Innenfläche freiliegt. In diesem freiliegenden Bereich wird beim eigentlichen Herstellungsverfahren der Mittelbund erzeugt.

Diese vorgefertigte Lagerbuchse wird in der Regel erst beim Weiterverarbeiter mit dem oder den Mittelbunden versehen und je nach Anwendungszweck dabei mit weiteren Bauteilen verbunden. Die vorgefertigte Lagerbuchse ist daher Gegenstand des Patentanspruchs 2.

Auch diese vorgefertigte Lagerbuchse kann bereits mit einem oder zwei Endbunden versehen sein.

Das Herstellungsverfahren ist dadurch gekennzeichnet, daß eine solche vorgefertigte Lagerbuchse verwendet wird, deren Stützkörper in mindestens einem von den Buchsenenden beabstandeten Bereich an seiner Innenfläche freiliegt, daß in diese Lagerbuchse ein Innendorn gesteckt wird, daß diese Lagerbuchse an ihrer Außenfläche unter Freilassung mindestens eines Spaltes, der dem freiliegenden Bereich gegenüberliegt, gehalten wird und daß die Lagerbuchse in axialer Richtung unter Materialverdrängung in den Spalt zur Ausbildung eines Bundes gestaucht wird, so weit, bis der Wulst geschlossen wird.

Wenn mehrere Mittelbunde hergestellt werden sollen, ist ein Werkzeug zu verwenden, das eine entsprechende Anzahl von Spalten aufweist, in denen die Mittelbunde ausgebildet werden können.

Beispielhafte Ausführungsformen der Erfindung werden nachfolgend anhand der Zeichnungen näher erläutert.

Es zeigen:
- Fig. 1: eine Buchse mit Mittelbund im Schnitt vor dem Einsetzen in eine Gummirolle,
- Fig. 2: die in Fig. 1 gezeigte Buchse im eingesetzten Zustand,
- Fig. 3: eine Buchse mit zwei Mittelbunden im eingebauten Zustand,
- Fig. 4: eine Biegekupplung mit einer Buchse gemäß einer weiteren Ausführungsform,
- Fig. 5a: eine Platine in Draufsicht für die Herstellung einer Buchse,
- Fig. 5b: einen Schnitt längs der Linie V-V durch die in Fig. 5a gezeigte Platine,
- Fig. 5c: einen Schnitt durch eine aus der in Fig. 5a gezeigten Platine hergestellte Buchse,
- Fign.6a+6b: einen Vertikalschnitt durch Buchse und Werkzeug zur Veranschaulichung des Herstellungsverfahrens.

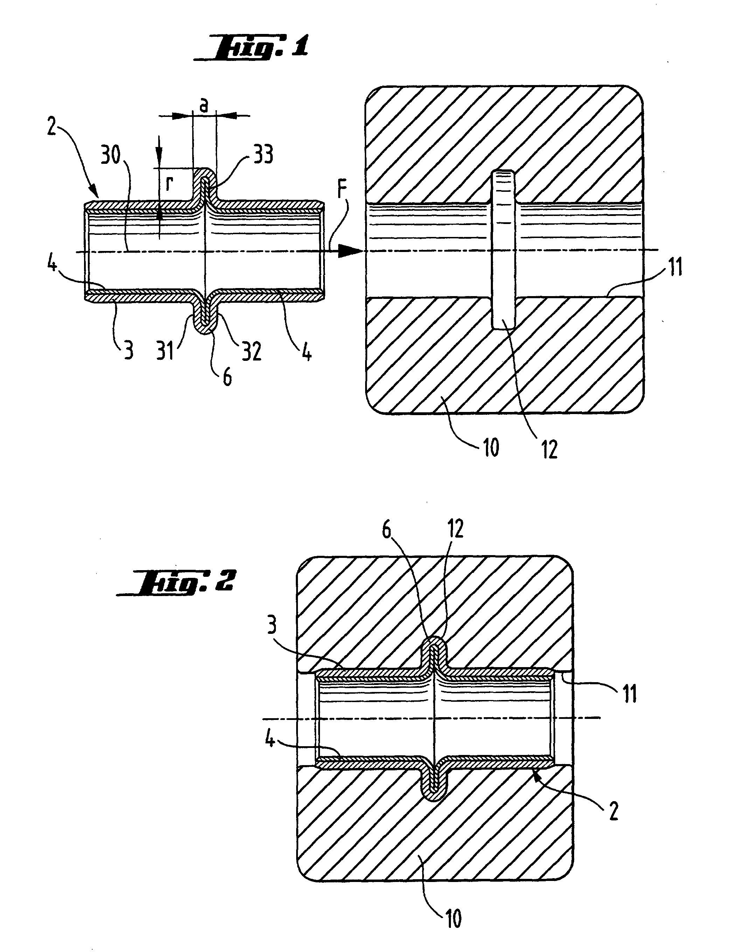

In der Fig. 1 ist eine Buchse 2 mit einem Mittelbund 6 dargestellt. Die Buchse 2 besitzt einen Stützkörper 3, der auf seiner Innenfläche eine Gleitschicht 4 aufweist. Im Bereich des Mittelbundes 6 befindet sich ebenfalls Gleitschichtmaterial. Die beiden Innenflächen 33 des Bundes 6, die durch das Gleitschichtmaterial gebildet werden, liegen ohne Zwischenraum unmittelbar aufeinander. Die beiden Außenflächen 31 und 32 des Bundes 6 sind senkrecht zur Längsachse 30 der Lagerbuchse 2 ausgerichtet. Die radiale Erstreckung r ist größer als die axiale Erstreckung a.

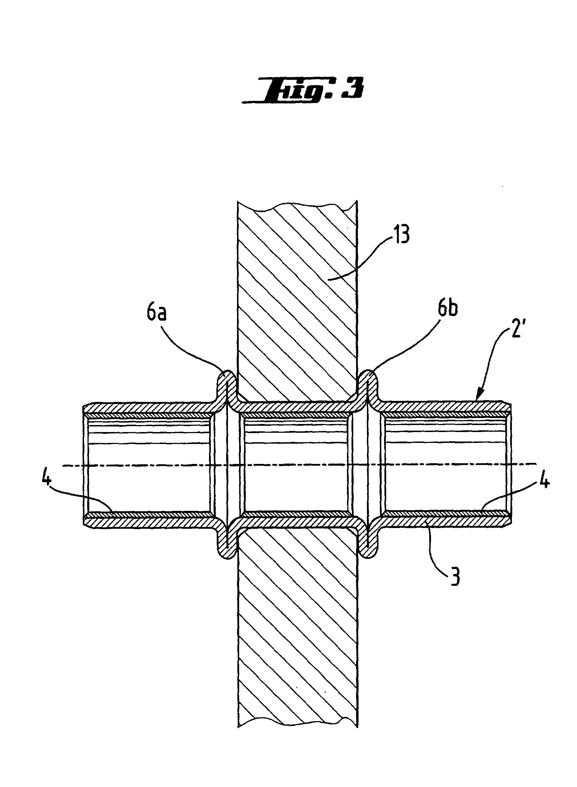

Diese Buchse 2 ist für eine Lagerung einer Gummirolle 10 vorgesehen, die eine Aufnahme 11 und eine mittige Ausnehmung 12 aufweist. Die Buchse 2 wird, wie in der Fig. 2 dargestellt ist, in die Gummirolle 10 eingedrückt (Pfeil F), bis der Mittelbund 6 in die Ausnehmung 12 einschnappt. Die Lage der Buchse 2 wird durch die Ausnehmung 12 und den Mittelbund 6 definiert, wobei der Bund 6 gleichzeitig auch die Lage der Buchse fixiert. Ein Verdrehen oder ein Herausrutschen der Lagerbuchse im Betrieb als Laufrad oder dergleichen kann nicht auftreten.

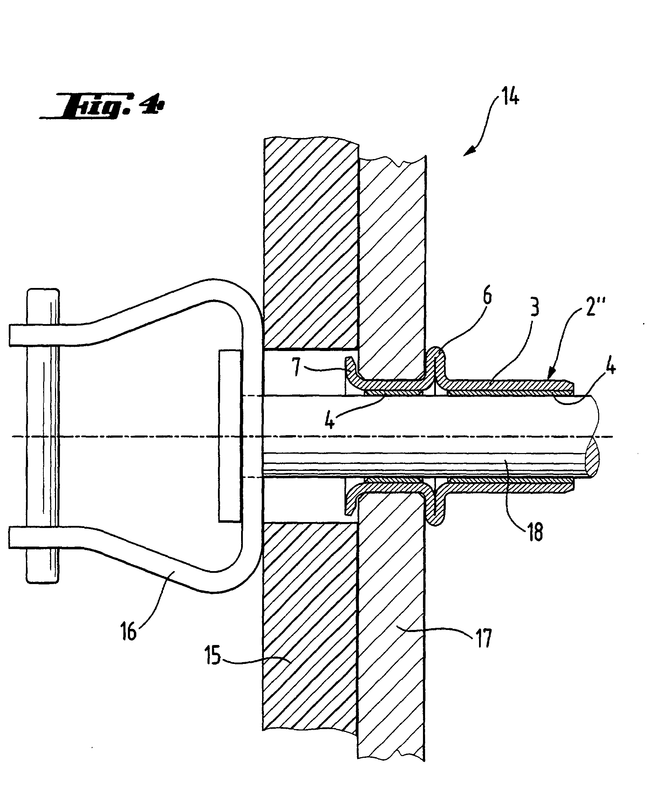

In der Fig. 3 ist eine weitere Ausführungsform einer Lagerbuchse 2' dargestellt, die ebenfalls einen Stützkörper 3 aufweist, der auf der Innenfläche eine Gleitschicht 4 trägt. Diese Buchse 2' besitzt zwei Mittelbunde 6a und 6b, zwischen denen eine Platte, beispielsweise ein Pedalhebel 13 angeordnet ist. Im Bereich der Mittelbunde 6a, 6b befindet sich keine Gleitschicht 4. Während beim Stand der Technik hierzu ein rohrförmiges Bauteil notwendig war, das mit dem Pedalhebel 13 verbunden wurde und in das dann zwei einzelne Buchsen eingesteckt werden mußten, wird jetzt nur noch ein einziges Bauteil, nämlich die Lagerbuchse 2' verwendet.

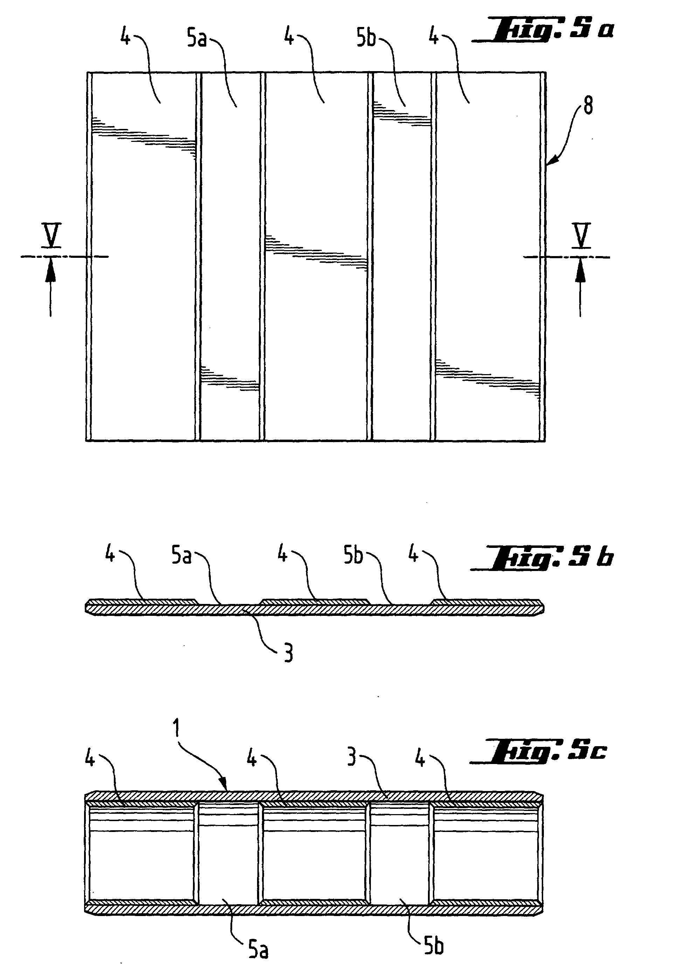

In der Fig. 4 ist ein Biegegelenk 14 dargestellt, das einen Kardangelenkhalter 16, ein Lenksäulenteil 17 und zwischen diesen beiden Bauteilen eine elastische Scheibe 15 umfaßt. Die Bauteile 16 und 17 werden über einen Bolzen 18 miteinander verbunden, der in einer Lagerbuchse 2" steckt. die elastische Scheibe 15 verformt sich unter Belastung, so daß der Bolzen 18 sowohl eine axiale Bewegung als auch eine Drehbewegung ausführen kann. Hierzu ist es notwendig, daß der Bolzen in der Buchse 2" über einen Großteil seiner Länge gerührt wird. Da jedoch das Bauteil 17 eine relativ geringe Materialstärke aufweist, ist es erforderlich, daß die Buchse 2'' deutlich gegenüber dem Bauteil 17 vorsteht. Beim Stand der Technik wären hierzu zusätzliche Bauteile erforderlich, in die dann entsprechende Buchsen mit Endbunden eingesteckt werden müßten. In der hier gezeigten Ausführungsform ist lediglich eine Lagerbuchse 2" erforderlich, die einen Mittelbund 6 und einen Endbund 7 aufweist. Der Abstand zwischen Endbund 7 und Mittelbund 6 ist auf die Materialstärke des Lenksäulenteils 17 angepaßt. Es handelt sich hier um eine asymmetrische Befestigung.

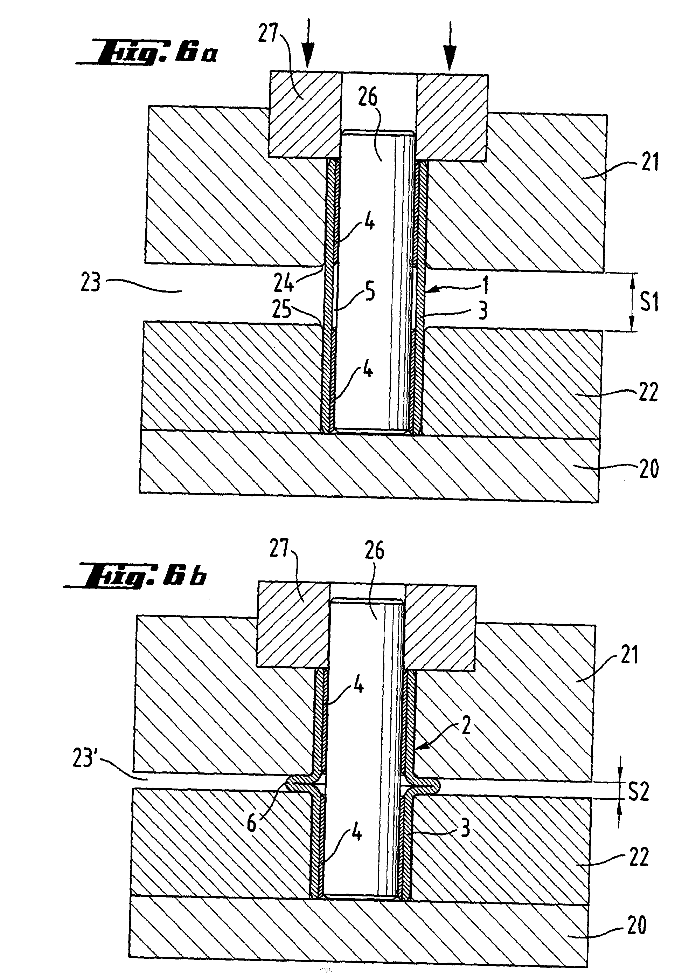

In der Fig. 5a ist die Draufsicht auf eine Platine 8 dargestellt, die zur Herstellung einer Lagerbuchse mit zwei Mittelbunden vorgesehen ist. Dementsprechend besitzt die Platine freiliegende Bereiche 5a und 5b, in denen die Beschichtung für die Gleitschicht 4 entfernt worden ist. Es besteht auch die Möglichkeit, die Platine 8 bereits nur in den entsprechenden Bereichen zu beschichten, so daß die Bereiche 5a und 5b freiliegen.

In der Fig. 5b ist ein Schnitt durch die Platine 8 längs der Linie V-V dargestellt, so daß die freiliegenden Bereiche 5a und 5b deutlich als Nuten zu sehen sind.

In der Fig. 5c ist eine aus dieser Platine 8 hergestellte Buchse dargestellt, die als vorgefertigte Buchse beim eigentlichen Herstellungsvorgang Verwendung findet, wie er im Zusammenhang mit den Fign. 6a und 6b beschrieben wird.

Das in Fig. 6a gezeigte Werkzeug besitzt eine Bodenplatte 20 sowie zwei übereinander angeordnete Ringe 21 und 22. Diese Ringe 21, 22 halten die vorgefertigte Lagerbuchse 1 an ihrer Außenfläche, wobei die beiden Ringe 21 und 22 beabstandet zueinander angeordnet sind, so daß zwischen beiden Ringen ein Spalt 23 verbleibt. Im Bereich des Spaltes 23 besitzen die Ringe 21, 22 abgerundete Kanten 24 und 25. Der Spalt 23 ist im Bereich des freiliegenden Bereiches 5 angeordnet ist, weil in diesem Bereich der Mittelbund ausgebildet werden soll.

Im Innern der vorgefertigten Lagerbuchse 1 befindet sich ein Innendorn 26, der beim nachfolgenden Stauchvorgang verhindern soll, daß das Material der Lagerbuchse 1 nach innen ausweicht. Auf die Stirnfläche der Lagerbuchse 1 wird ein Stauchring 27 gesetzt, der zusammen mit dem oberen Ring 21 nach unten gedrückt wird, wie dies in der Fig. 6b dargestellt ist. Hierbei wird das Stützkörpermaterial 4 in den sich kontinuierlich verringernden Spalt 23' gedrückt, wobei sich der Wulst 6 ausbildet. Der Spalt 23 verringert sich bei diesem Stauchvorgang von der Breite S1 auf die Breite S2.

Die Rundungen 24 und 25 sind erforderlich, damit das Stützkörpermaterial 4 im Bereich des Wulstes 6 nicht durch eine scharfe Kante beschädigt wird, was die Stabilität des Wulstes 6 beeinträchtigen würde. Die Innenfläche der Buchse 2 ist auch im Bereich des Wulstes 6 nahezu vollständig mit Gleitschichtmaterial belegt, weil das gesamte unbeschichtete Stützkörpermaterial für die Ausbildung des Wulstes 6 verwendet wurde. Nach diesem Fertigungsschritt werden der Stauchring 7, der Innendorn 6 und der obere Ring 21 entfernt und die erfindungsgemäße Buchse 2 mit dem Mittelbund 6 kann entnommen werden.

Wenn eine Lagerbuchse mit mehreren Mittelbunden erzeugt werden soll, ist ein Werkzeug erforderlich, das mehrere Ringe aufweist, so daß eine entsprechende Anzahl von Spalten 23 zur Verfügung steht. Der Stauchvorgang läuft dann entsprechend ab.

### Bezugszeichen

- 1: vorgefertigte Lagerbuchse
- 2,2',2": Lagerbuchse
- 3: Stützkörper
- 4: Gleitschicht
- 5,5a,5b: freiliegender Bereich
- 6,6a,6b: Mittelbund
- 7: Endbund
- 8: Platine
- 10: Gummirolle
- 11: Aufnahme
- 12: ringförmige Ausnehmung
- 13: Pedalhebel
- 14: Biegegelenk
- 15: elastische Scheibe
- 16: Kardangelenkhalter
- 17: Lenksäulenteil
- 18: Bolzen
- 20: Bodenplatte
- 21: oberer Ring
- 22: unterer Ring
- 23,23': Spalt
- 24: Rundung
- 25: Rundung
- 26: Innendorn
- 27: Stauchring
- 30: Längsachse
- 31,32: Außenfläche
- 33: Innenfläche
- F: Richtungspfeil
- S1: Breite
- S2: Breite
- r: radiale Erstreckung
- a: axiale Erstreckung

## Patentansprüche

1. Lagerbuchse mit einem Stützkörper (3), der auf seiner Innenfläche (33) mindestens eine Schicht, insbesondere eine Gleitschicht (4), aufweist,
**dadurch gekennzeichnet,**
**daß** mindestens ein Bund (6,6a,6b) in Form eines umlaufenden, geschlossenen Wulstes beabstandet von den Buchsenenden vorgesehen ist.

2. Lagerbuchse nach Patentanspruch 1, **dadurch gekennzeichnet, daß** die
Außenflächen (31,32) des Bundes (6,6a,6b) senkrecht zur Längsachse (30) der Lagerbuchse (2,2',2") ausgerichtet sind.

3. Lagerbuchse nach Patentanspruch 1 oder 2, **dadurch gekennzeichnet, daß** die radiale Erstreckung r des Bundes (6,6a,6b) größer ist als seine axiale Erstreckung a.

4. Lagerbuchse nach einem der Ansprüche 1 bis 3 **dadurch gekennzeichnet, daß** der Stützkörper (3) in mindestens einem ringförmigen von den Buchsenenden beabstandeten Bereich (5,5a,5b) an seiner Innenfläche freiliegt.

5. Lagerbuchse nach einem der Patentansprüche 1 bis 4, **dadurch gekennzeichnet, daß** an mindestens einem Buchsenende ein Bund (7) vorgesehen ist.

6. Verwendung einer Lagerbuchse nach Patentanspruch 1 als Einsatzteil für eine Rolle aus elastischem Material, insbesondere aus Gummi.

7. Verwendung einer Lagerbuchse nach Patentanspruch 1 mit zwei Mittelbunden als Pedallagerung.

8. Verwendung einer Lagerbuchse nach einem der Patentansprüche 1 bis 3 und 5 mit mindestens einem Mittelbund und mindestens einem Endbund als Lagerung für ein Biegegelenk, insbesondere für Lenksäulen.

9. Verfahren zur Herstellung einer Lagerbuchse (2,2',2") mit einem Stützkörper (3), der auf seiner Innenfläche mindestens eine Schicht, insbesondere eine Gleitschicht (4), aufweist, **dadurch gekennzeichnet,**
**daß** eine vorgefertigte Lagerbuchse (1) verwendet wird, deren Stützkörper (3) in mindestens einem von den Buchsenenden beabstandeten Bereich (5,5a,5b) an seiner Innenfläche freiliegt,
**daß** in diese Lagerbuchse (1) ein Innendom (26) gesteckt wird,
**daß** diese Lagerbuchse (1) an ihrer Außenfläche unter Freilassung mindestens eines Spaltes (23), der dem freiliegenden Bereich (5,5a,5b) gegenüberliegt, gehalten wird, und
**daß** die Lagerbuchse (1) in axialer Richtung unter Materialverdrängung zur Ausbildung eines umlaufenden Wulstes (6,6a), in den Spalt (23,23') gestaucht wird, so weit bis der Wulst gesalossen wird.

## Claims

1. A bearing bush comprising a support body (3) which on its inside surface (33) has at least one layer, in particular a plain bearing layer (4), **characterised in that** provided at a spacing from the ends of the bush is at least one collar (6, 6a, 6b) in the form of a peripherally extending, closed bead.

2. A bearing bush according to claim 1 **characterised in that** the outside surfaces (31, 32) of the collar (6, 6a, 6b) are oriented perpendicularly to the longitudinal axis (30) of the bearing bush (2, 2', 2").

3. A bearing bush according to claim 1 or claim 2 **characterised in that** the radial extent r of the collar (6, 6a, 6b) is greater than its axial extent a.

4. A bearing bush according to one of claims 1 to 3 **characterised in that** the support body (3) is exposed at its inside surface in at least one annular region (5, 5a, 5b) spaced from the ends of the bush.

5. A bearing bush according to one of claims 1 to 4 **characterised in that** a collar (7) is provided at at least one end of the bush.

6. Use of a bearing bush according to claim 1 as an insert member for a roller of elastic material, in particular rubber.

7. Use of a bearing bush according to claim 1 with two central collars as a pedal bearing.

8. Use of a bearing bush according to one of claims 1 to 3 and 5 with at least one central collar and at least one end collar as a bearing for a flexural joint, in particular for steering columns.

9. A process for the production of a bearing bush (2, 2', 2"), comprising a support body (3) which on its inside surface has at least one layer, in particular a plain bearing layer (4), **characterised in that**
a prefabricated bearing bush (1) is used, whose support body (3) is exposed at its inside surface in at least one region (5, 5a, 5b) which is spaced from the ends of the bush,
an inner bar (26) is fitted into said bearing bush (1),
said bearing bush (1) is held at its outside surface, leaving free at least one gap (23) which is opposite to the exposed region (5, 5a, 5b), and
the bearing bush (1) is upset in the axial direction, with material displacement into the gap (23, 23') to form a peripherally extending bead (6, 6a), until the bead is closed.

## Revendications

1. Coussinet comprenant un support (3) présentant sur sa surface intérieure (33) au moins une couche, notamment une couche de glissement (4), **caractérisé en ce qu'**au moins une collerette (6, 6a, 6b) ayant la forme d'un bourrelet fermé faisant tout le tour est prévue à distance des extrémités dù coussinet.

2. Coussinet selon la revendication 1, **caractérisé en ce que** les surfaces extérieures (31, 32) de la collerette (6, 6a, 6b) sont orientées perpendiculairement à l'axe longitudinal (30) du coussinet (2, 2', 2").

3. Coussinet selon la revendication 1 ou 2, **caractérisé en ce que** l'étendue radiale r de la collerette (6, 6a, 6b) est supérieure à son étendue axiale a.

4. Coussinet selon l'une des revendications 1 à 3, **caractérisé en ce que** le support (3) est dégagé au niveau de sa surface intérieure dans au moins une zone annulaire (5, 5a, 5b) distante des extrémités.

5. Coussinet selon l'une des revendications 1 à 4, **caractérisé en ce qu'**une collerette (7) est prévue à au moins une extrémité du coussinet.

6. Mise en oeuvre d'un coussinet selon la revendication 1 en tant qu'élément d'un rouleau en une matière élastique, notamment en caoutchouc.

7. Mise en oeuvre d'un coussinet selon la revendication 1 muni de deux collerettes centrales en tant que palier de pédale.

8. Mise en oeuvre d'un coussinet selon l'une des revendications 1 à 3 et 5, comprenant au moins une collerette centrale et au moins une collerette d'extrémité, en tant que palier pour un joint articulé de flexion, notamment pour colonnes de direction.

9. Procédé pour fabriquer un coussinet (2, 2', 2") comprenant un support (3) présentant sur sa surface intérieure au moins une couche, notamment une couche de glissement (4), **caractérisé en ce qu'**on utilise un coussinet préfabriqué (1) dont le support (3) est dégagé au niveau de sa surface intérieure dans au moins une zone annulaire (5, 5a, 5b) distante des extrémités, **en ce qu'**un mandrin (26) est enfoncé dans ce coussinet (1), **en ce que** ce coussinet (1) est maintenu sur sa surface extérieure en laissant libre au moins une fente (23) faisant face à la zone dégagée (5, 5a, 5b), et **en ce que** le coussinet (1) est comprimé axialement en refoulant dans la fente (23, 23') de la matière pour former un bourrelet circulaire (6, 6a), jusqu'à ce que le bourrelet soit fermé.
